(19)

Europäisches Patentamt
European Patent Office
Office européen des brevets

(11) **EP 3 809 187 A1**

(12) **EUROPEAN PATENT APPLICATION**

(43) Date of publication:
**21.04.2021 Bulletin 2021/16**

(51) Int Cl.:
***G02B 27/01*** *(2006.01)*

(21) Application number: **20461572.8**

(22) Date of filing: **16.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2019 PL 43148619**

(71) Applicant: **Seemore S.A.**
**50-319 Wroclaw (PL)**

(72) Inventors:
• **PALMER, Grzegorz**
  **45-563 Opole (PL)**
• **TRELAK, Wojciech**
  **55-093 Kielczów (PL)**
• **CYPRYCH, Konrad**
  **59-220 Legnica (PL)**

(74) Representative: **Witek, Rafal**
**WTS Patent Attorneys**
**Witek, Sniezko & Partners**
**Ul. Rudolfa Weigla 12**
**53-114 Wroclaw (PL)**

(54) **VISOR FOR A HELMET OR HEADGEAR**

(57) The object of the invention is a visor for a helmet or headgear comprising a first surface and a second surface parallel to the first surface and located on the opposite side of the visor relative to the first surface, formed in relation to the longitudinal curvature and transverse curvature of the visor, characterised in that, a first assembly (4) of semitranslucent flat reflective elements, composited with the first surface (3) of the visor (1) facing outwards from the first surface and opposite to the second surface (2), is located on the first surface (3), and a second assembly (5) of semitranslucent flat reflective elements, composited with the second surface (2) of the visor (1) facing outwards from the second surface and opposite to the first surface, is located on the second surface (2), and the reflective elements of the second assembly (5) of semitranslucent flat reflective elements are parallel to the reflective elements of the first assembly (4) of semitranslucent flat reflective elements, wherein the first (FRE4) and second (FRE5) semitranslucent flat reflective elements, forming the first (4) and second (5) assembly of semitranslucent flat reflective elements, have a shorter side $c$ and longer side $b$ and thickness $d$, and the shorter side $c$ of the first (FRE4) and second (FRE5) reflective elements is at least 10 $\mu$m long, wherein the first (FRE4) and second (FRE5) semitranslucent flat reflective elements, forming the first (4) and second (5) assembly of semitranslucent reflective elements, are arranged with their shorter side c parallel to the longitudinal curvature KW of the visor and with their longer side $b$ parallel to the transverse curvature KP of the visor (1), wherein the reflective elements (FRE4, FRE5), forming the first assembly (4) of semitranslucent flat reflective elements and the second assembly (5) of semitranslucent flat reflective elements have the same thickness $d$.

Fig. 7

**Description**

The object of the invention is a shield for a helmet or headgear. The invention relates to the field of optics and is applicable in construction of helmets or headgears that have a mobile or non-mobile translucent face shield, and where it is necessary to simultaneously observe the environment and operational parameters of a device or a vehicle while driving.

From U.S. Patent Application US2018217305A1 a projecting device is known, comprising a substrate made of transparent material on which two diffraction gratings (input and output) are located, arranged on a single plane. The substrate functions as a waveguide for propagating, on the basis of total internal reflection, the optical signal between the diffraction gratings. Each grating has a form of parallelly arranged longitudinal surfaces which are inclined at a certain angle to the substrate surface, wherein the input and output gratings are located on the same side of the substrate. The substrate is made of transparent material, which allows simultaneous observation of the image emitted from the output grating, superimposed on the image of the environment located behind it.

From European Patent Document EP0794448B1, an optical projection system is known, comprising an image source, a focusing lens and a series of surfaces reflecting the emitted image. The image emitted from the source is focused by a plano-convex lens and projected on a first plane which reflects it on a second reflective plane which is located on the inner plane of the visor. The second reflective plane reflects the image on a third reflective plane which also expands the image and transmits it to a fourth reflective plane. The fourth reflective plane refocuses the expanded image and performs projection in the line of sight of the observer. At the same time the second and fourth reflective planes are constituted by holographic gratings having a complex structure.

Chinese Application CN204855944U concerning a utility model, discloses an optical system used in a car cockpit. It comprises a projector located on a sunshade and a Fresnel lens. The Fresnel lens is semitransparent and constitutes a projection screen for the image projected from the projector. This facilitates overlapping of the image in front of the car's windshield and the image from the projector. Lens 22 does not constitute a part of the windshield, i.e. it is not permanently fixed to it, nor does it constitute a surface relief on the windshield.

From another U.S. Patent Application, US2016282616A1, a HUD (Head-Up Display) type system is known, comprising a projector, a screen, and a beam combiner, which is constituted by Fresnel's lens/mirror (FM). The combiner is applied as one of the layers in the glazed glass panel. It is semitranslucent to light, thereby allowing simultaneous observation of the image projected and reflected from the projector and the external image superimposed thereon.

Japanese Patent Application JP2010019874A describes an optical projection system of a head-mounted display (HMD) type for application in a helmet. Inside the helmet casing, e.g. inside the side wall, an image projector is located, said image being projected on a plane mirror. Afterwards, the image is reflected towards the lens, which refracts and projects it on another mirror reflecting it towards a third mirror. The third mirror projects the image on the inner surface of the visor, wherein the image passes through the transparent screen located under the surface of the visor. The projected image is reflected from the surface of the visor towards the eye. The transparent screen serves as a translucent window, while the remaining part of the optical system is contained in the casing formed be the projector, mirror, and lens.

Another U.S. Patent Application US2012162549A1 discloses an image display system structure of a head-mounted-display (HMD) type. The main structural part is a semitranslucent prism, wherein the bottom part thereof constitutes a projection plane. Whereas, on the upper part of the prism an image is projected, from the optical projection system, comprising an image projector, a concave-convex lens, a beam splitter, coupling lenses. The image projected on the prism, from the optical projection system, due to the total internal reflexion, is transmitted to the bottom part of the inner plane of the prism, from which projection towards the observer occurs.

Yet another U.S. Patent Application US2016037849A1 describes a motorcycle helmet equipped with an audio-visual system. The visual part comprises an image projector, wherein projection occurs on the first discrete reflective region and onto the second discrete reflective region.

From another European Patent Application EP0288365A1, a holographic display system structure is known, which can be mounted in a helmet or a vehicle cabin, of the Head-Up Display (HUD) type. The display system is comprised of: a screen emitting the image, a semitranslucent holographic plane mirror and a holographic parabolic mirror. The image from the screen is reflected by the semitranslucent holographic mirror with the first hologram, and afterwards projected from it onto the parabolic mirror, comprising a second hologram. The second hologram collimates the projected image and transmits it towards the viewer. Whereas the external image passes through the first and second holograms without refraction.

From International Application PCT WO2016203212A2, an optical system is known, for testing the reaction of the eye. The system comprises a beam combiner, a sensing element and two illuminating elements. Using the system, reaction of the eye to the image received from the environment is captured. The external image and the image of eye reaction are captured by the sensing element as a sum of the images from the combiner located between the layers of material having similar refractive indexes. The image combiner constitutes a system of reflective surfaces comprised of parallelly arranged longitudinal planes, which are inclined at a certain angle to the substrate surface and a fixed angle in relation to each other. At the same time their form depends on the structure of the sensing system. The reflective areas are small enough, so that they do not contribute to losses in image brightness. Additionally, the system can be easily adjusted to a carried device (e.g. headpiece, clothing).

The technical problem faced by the invention is to provide a visor for a helmet or headgear, which would provide the possibility of combining and observing the image projected onto the visor from the projection system along with the image of the environment, regardless of the visor's shape and size, wherein the image, being a sum thereof, would be free from defects resulting from the imperfections of the element reflecting the image from the projector and the visor's structure would prevent chromatic dispersion of the image. At the same time the projection system should not be physically connected to the imaging surface and should be characterised by a simple construction without additional optical elements such as lenses or mirrors. Moreover, the reflective element can be used in construction of any visor. Surprisingly, the above problems were solved by the present invention.

The object of the invention is a visor for a helmet or headgear comprising a first surface and a second surface parallel to the first surface and located on the opposite side of the visor relative to the first surface, formed in relation to the longitudinal curvature and transverse curvature of the visor, characterised in that, a first assembly of semitranslucent flat reflective elements, composited with the first surface of the visor facing outwards from the first surface and opposite to the second surface, is located on the first surface, and a second assembly of semitranslucent flat reflective elements, composited with the second surface of the visor facing outwards from the second surface and opposite to the first surface, is located on the second surface, and the reflective elements of the second assembly of semitranslucent flat reflective elements are parallel to the reflective elements of the first assembly of semitranslucent flat reflective elements, wherein the first and second flat semitranslucent reflective elements, forming the first and second assembly of semitranslucent flat reflective elements, have a shorter side c and longer side b and thickness d, and the shorter side c of the first and second reflective elements is at least 10 $\mu$m long, wherein the first and second semitranslucent flat reflective elements, forming the first and second assembly of semitranslucent reflective elements, are arranged with their shorter side c parallel to the longitudinal curvature of the visor and with their longer side b parallel to the transverse curvature of the visor, wherein the reflective elements, forming the first assembly of semitranslucent flat reflective elements and the second assembly of semitranslucent flat reflective elements have the same thickness d.

In the preferred embodiment of the invention, the second surface of the visor is completely covered with the semitranslucent flat reflective elements. The surface prepared in such a way allows displaying of the image on the entire surface of the visor without distorting the external image, thereby allowing surrounding the user with a virtual image on the entire width/height of the viewing angle.

In another preferred embodiment of the invention, semitranslucent flat reflective elements forming the first assembly of semitranslucent flat reflective elements or the second assembly of semitranslucent flat reflective elements are inclined at an angle $\alpha$ relative to the first surface of the visor or the second surface of the visor.

In a further preferred embodiment of the invention, the inclination angle $\alpha$ of the semitranslucent flat reflective elements is in range of 90° to -90° relative to the longitudinal curvature of the visor. The value of inclination angle $\alpha$ is measured relative to the normal to the outer plane or the inner plane of the visor.

In yet another preferred embodiment of the invention, the second surface of the visor is covered with a protective outer layer. Protective layer cover does not affect the optical properties of the system but results in a flat outer surface of the visor and such that it exhibits no tactile differences in texture and also protects the outer reflective elements from damage. The protective layer can be constituted by a polymer film made of plastic having a refractive index which is the same as for the material from which the visor is made.

In another preferred embodiment of the invention, thickness *d* of the semitranslucent flat reflective elements of the first assembly of semitranslucent flat reflective elements or the second semitranslucent flat reflective elements of the second assembly of reflective elements is constant.

In a further preferred embodiment of the invention, thickness d of the semitranslucent flat reflective elements of the first assembly of semitranslucent flat reflective elements or the second semitranslucent flat reflective elements of the second assembly of reflective elements depends on the degree of curvature of the visor.

In yet another preferred embodiment of the invention, the first surface is the inner surface of the visor. It is the surface which is located directly in front of the projection system arranged inside the helmet.

In another preferred embodiment of the invention, the second surface is the outer surface of the visor. This surface is parallel to the inner surface of the visor.

In a further preferred embodiment of the invention, the arrangement of the semitranslucent flat reflective elements provides a difference in reflection angles of the radiation incident on the elements of the first and second assembly of semitranslucent flat reflective elements, that is less than 1°, wherein the difference depends on the wavelength of the incident radiation and the incident radiation constitutes radiation in the visible range. This angle is maintained both when only a part of the second surface is covered with the assembly of semitranslucent flat reflective elements and when it is completely filled with reflective elements.

The embodiments of the invention are shown on the drawing, on which fig. 1 shows a visor with a part of the inner surface and the reflective surface, fig. 2 shows a helmet with the visor and the outer surface partially covered with the reflective surface, fig. 3 shows an enlarged view of the visor with the reflective outer surface, where c is width of the reflective element, b is length of the reflective element, fig. 4 shows a diagram of reflection of the image projected from the projector with the external image relative to the normal $N_2$ obtained by introducing the reflective elements on the first and second surface of the visor, without which the reflection would occur along the normal $N_1$, where $\theta_1$ and $\theta_2$ are incident angle and reflection angle respectively, fig. 5 shows a visor with the outer surface completely covered with the reflective surface, fig. 5a shows a part of the assembly of flat reflective elements with an indicated semitranslucent flat reflective element, fig. 6 shows a cross-section of the visor along the longitudinal curvature with inclination angles of the semitranslucent flat reflective elements, fig. 7 shows a cross-section of the visor along the longitudinal curvature with an additional protective layer on the outer surface, figs. 8a-8b show arrangement of the reflective surfaces on the visor, wherein a change of the curvature angle of the visor does not affect the incidence and reflection angle, figs. 9a-9b show relationship between the thickness d of the reflective element and the curvature of the visor, fig. 10 shows a diagram of reflection on the reflective surfaces, fig. 11 shows the angle of the first order of diffraction as a function of reflective element size for light having a wavelength $\lambda_1 = 400$ nm and $\lambda_2 = 650$ nm incident at angle 17°, figs. 12a-12b show the angle of the first order of diffraction as a function of reflective element size for two chosen angles of incidence 0° (12a) and 60° (12b).

**Example 1 Structure of the visor with a surface that is partially filled with the semitranslucent flat reflective elements**

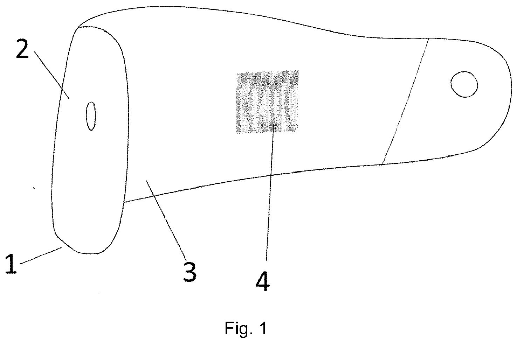

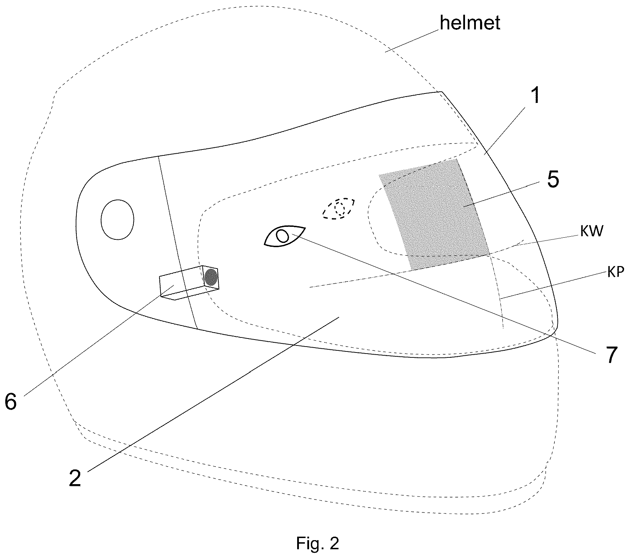

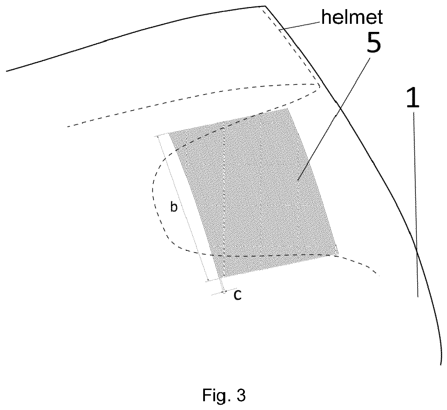

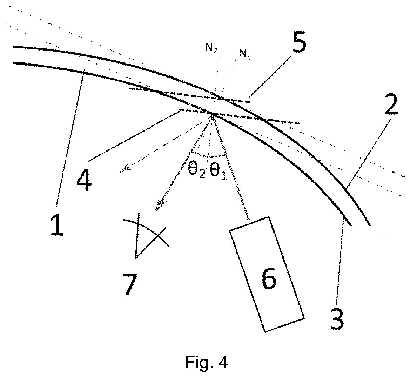

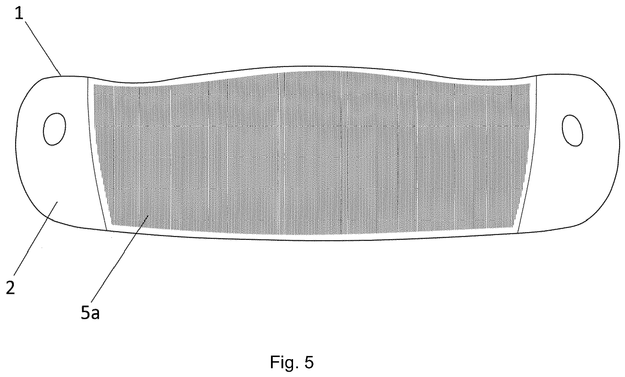

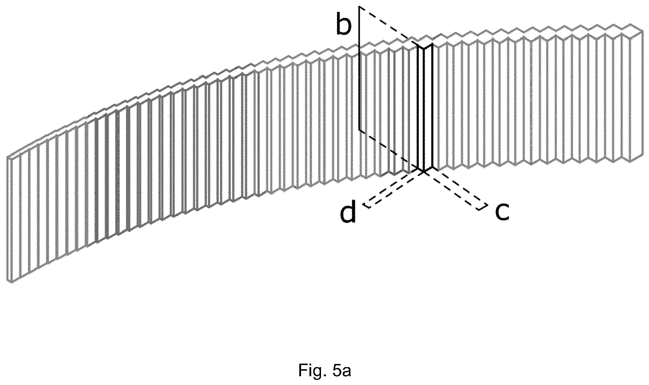

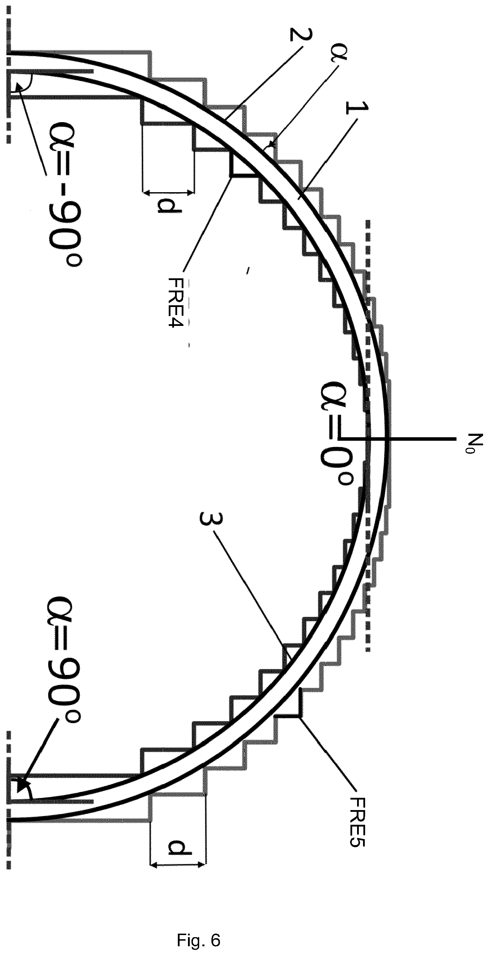

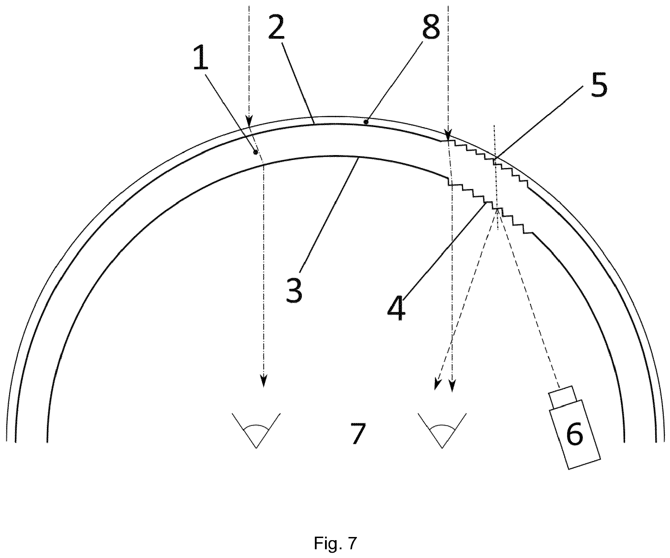

The visor 1 is comprised of the main part of the visor i.e. the first surface 3 of the visor 1, constituting the inner surface of the visor (facing the observer), and of the second surface 2 constituting the outer surface of the visor 1 (facing the outside world). Part of the outer surface 2 (fig. 2) is formed as an assembly of flat reflective elements 5 (FRE5) integrated into the curvature of the second surface 2 (fig. 7) and arranged at an angle $\alpha$ forming the reflective surface (fig. 4). Further, a part of the inner surface 3 is formed as an assembly of flat reflective elements 4 (FRE4) integrated into the curvature of the first surface 3 of the visor 1 (fig. 6), arranged at an angle $\alpha$ forming the reflective (fig. 4) surface (fig. 1), their main function is reflecting the light from the projector 6, so that the light will reach the observer 7 (fig. 4), wherein it is essential that at least a portion of the light is reflected from these elements. By forming a part of the first surface 3 (inner) or second surface 2 (outer) of the visor 1, it should be understood that a part of it has a form of an assembly of flat reflective elements. Form of an assembly of flat reflective elements should be understood as an array of flat reflective elements FRE arranged parallelly one after another, as illustrated in fig. 5 or fig. 5a. Placement of such formation, i.e. location on the inner 3 or outer surface 2 of assemblies of flat reflective elements 4 or 5 of the visor depends on the location of the projector 6 inside the helmet or headgear and on the degree of longitudinal curvature KW and transverse curvature KP of the visor 1. Exemplary placement of the reflective assemblies 4 or 5 on the visor 1 is shown in fig. 1 or in fig. 2. A single flat reflective element FRE, from which the flat reflective element surfaces 4 and 5 are formed, has a longitudinal dimension b, a dimension c transverse to it, and thickness d (fig. 3, fig. 5a, figs. 9a-9b). The reflective surface 4 or 5 is formed by an array of flat reflective elements FRE, which are arranged parallelly relative to each other along the long edge b. The flat reflective elements (FRE4, FRE5) forming the reflective surfaces 4 and 5 are semitranslucent for incident radiation. This provides a possibility of propagating the external image to the observer and from the observer, i.e. observing the environment from the inside of the helmet. An example of the single flat reflective element FRE is shown in fig. 5a. Essentially, they are shaped as rectangles with sides *b* and *c*. Reflective element assemblies 4 and 5 and arranged on surfaces 2 and 3 in such a way, that the longer sides b lie along the transverse curvature KP of the visor 1, the shorter sides c lie parallelly to the longitudinal curvature KW of the visor 1. The reflective assemblies 4 and 5 on the surface 2 or 3 are arranged relative to each other such that their longitudinal dimensions *b* and *c* of single flat reflective elements FRE, forming said assemblies, are parallel to each other. Side length c of the reflective elements FRE4 or FRE5 is at least 10 $\mu$m. As a result, the difference between angles of reflection for the visible light incident on the reflective elements FRE is less than 1°. Elements FRE forming the reflective assemblies 4 or 5 are arranged at an angle $\alpha$ relative to the curvature of surface 2 or 3 of the visor 1. Angle $\alpha$ depends only on the degree of the longitudinal curvature KW of the visor 1 and the direction of incidence and reflection of light. The longitudinal curvature KW of the visor 1, being a negative characteristic of the visor, is eliminated by using multiple reflective elements with varying inclination angle $\alpha$ relative to the longitudinal curvature KW, such that each element has the same angle relative to the light incident on FRE. In a general case, if the entire surface of the visor is covered with reflective elements, angle $\alpha$ can vary in range of -90° to 90° relative to the curvature KW of visor 1, providing the possibility of light reflection at any angle relative to the longitudinal curvature KW, which is shown in fig. 6. The given value of angle $\alpha$ relates to the normal $N_0$ to the outer 2 or inner surface 3 of visor 1. This is in the case when the image projection is performed on the entire inner surface 3 of visor 1. Whereas, in case when the image from projector 6 is projected only on a part of the surface 3 of visor 1, the angle range is significantly narrower. For example, for a reflective area of size 5 cm × 5 cm, for one eye, angle α is comprised in range of 46° to 74°. However, this is true only for a single case of construction having limited application. Further, the same figure (fig. 6) also shows the arrangement of assemblies of flat reflective elements 4 and 5, formed by an array of single flat reflective elements FRE4 or FRE5, in relation to the inner surface 3 or outer surface 2 of visor 1. In order to maintain clarity of fig. 6, assemblies of flat reflective elements 4 and 5 are not indicated on it.

Elements of the first 4 and second 5 reflective assembly have the same thickness d. Thickness d depends on the shape i.e. curvature and structure of a given visor.

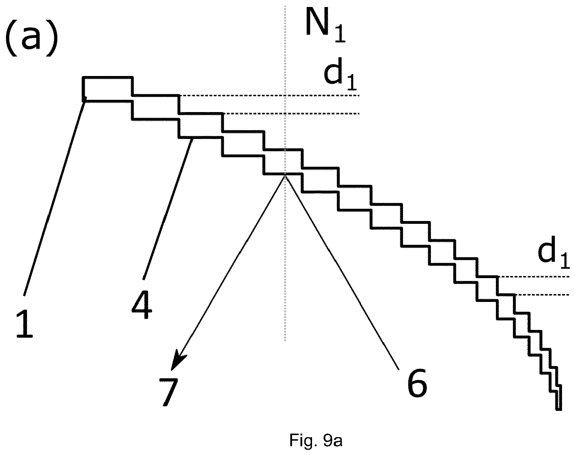

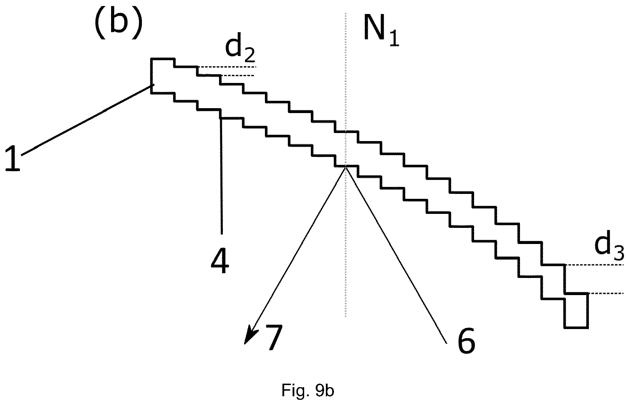

The principle of operation of the optical system is illustrated in fig. 4 and fig. 9, and described below.

Projector 6 emits the image towards the visor 1. The image is partially reflected from the surface of flat reflective elements (FRE) 4 located on the inner side 3 of the visor, and reaches the observer 7. Reflection from the inner reflective surface, constituted by the assembly of flat reflective elements 4, occurs by way of Fresnel's reflection. Ratio of reflection of vertically polarised light from the reflective surface is according to the formula (I):

$$R_S = \left( \frac{n_1 cos\theta_1 - n_2\sqrt{1 - \left(\frac{n_1}{n_2} sin\theta_i\right)^2}}{n_1 cos\theta_1 + n_2\sqrt{1 - \left(\frac{n_1}{n_2} sin\theta_i\right)^2}} \right)^2 (I)$$

where $R_S$ - reflection ratio, $n_1$ - refractive index of air, $n_2$ - refractive index of the visor's material, $\theta_i$ - incidence angle of light.

For horizontally polarised light, reflection ratio is according to the formula (II):

$$R_P = \left( \frac{n_1\sqrt{1 - \left(\frac{n_1}{n_2} sin\theta_i\right)^2} - n_2 cos\theta_i}{n_1\sqrt{1 - \left(\frac{n_1}{n_2} sin\theta_i\right)^2} + n_2 cos\theta_i} \right)^2 (II)$$

where $R_P$ is the reflection ratio. For non-polarised light, the effective reflection has an average value according to the formula (III):

$$R = \frac{1}{2}(R_S + R_P) \ (III)$$

The equations above (I,II, III) define the functionality of reflective elements depending on the incidence angle of light relative to the normal on the reflective surface. From the equations, it follows that for non-polarised light, the larger the incidence angle of light in relation to the normal of the surface, the larger the reflection ratio is. Regardless, the smallest reflection ratio $R_{min}$ depends only on the refraction index of the material from which the reflective element FRE is made and is according to expression (IV)

$$R_{min} = \left(\frac{n_1 - n_2}{n_1 - n_2}\right)^2 (IV).$$

It is therefore possible to use any inclination angle α of the reflective elements, the only thing that changes is the reflection ratio of light at certain minimum value of this angle.

The image from outside reaches the outer surface 2 of the visor 1. Parallelly located reflective elements of reflective assemblies 4 or 5 on the inner 3 and outer 2 side of the visor function as multiple parallelepiped facets facilitating propagation of the image to the observer 7. The image coming from the outside is shifted by a value $\Delta d_w$ according to formula (V):

$$\Delta d_w = d_w \cdot \sin\left(1 - \frac{cos(\theta)}{\sqrt{n^2 - sin^2(\theta)}}\right) (V)$$

where $d_w$ - thickness of the visor and corresponding to thickness d, θ - incidence angle of the image relative to the normal of the second surface 2, n - relative refractive index of the material from which visor 1 is made.

As a result, a non-distorted image reaches the observer. The image shift in the axis of the second surface 2, constituting the outer surface of the visor 1, is uniform for the entire structure of visor 1.

**Diffraction of the reflective element**

In the structural solution according to example 1, a single reflective element constituting a part of the first 4 or second 5 or 5a assembly of reflective elements can cause diffraction of light on the structure built from multiple surfaces. A condition for the diffraction occurring is obtaining, for specified reflection angles, a difference in optical path being a multiple of the wavelength of light.

The structural solution according to the invention assumes an optical element having a complex structure located on the visor's 1 curvature. For this reason, it may be impossible to determine the conditions for diffraction, which is a negative phenomenon from the perspective of the solution. Whereas it is possible to determine the threshold thickness d of the reflective element, merely by accounting for diffraction of the assembly of reflective elements. It depends on the specific structural solution. However, assuming a flat element having properties of a reflective element, it is possible to estimate the chromatic dispersion occurring as a result of diffraction and determining the threshold values of allowed sizes of reflective elements forming the reflective assemblies 4 and 5.

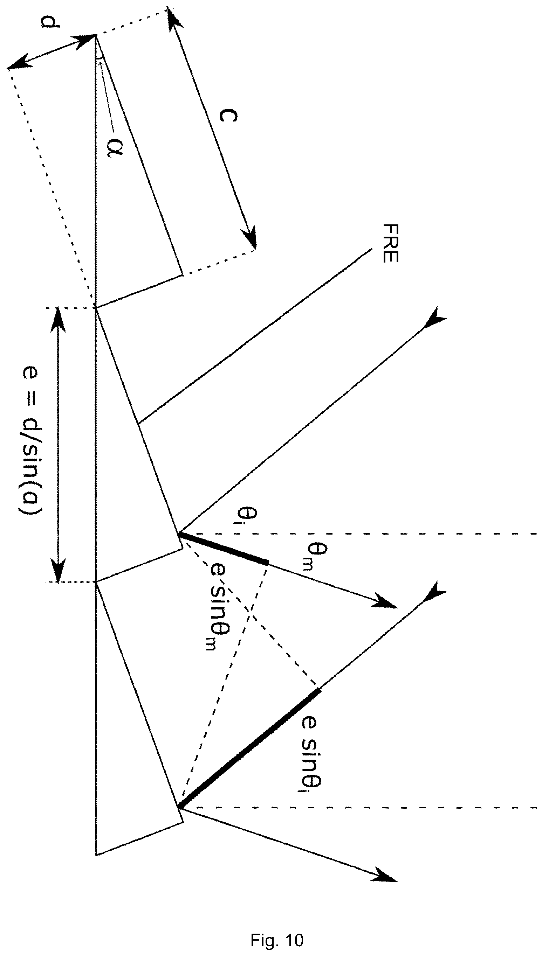

Let the assembly of reflective elements FRE, having a constant thickness d inclined at angle $\alpha$ acting as a diffraction grating with grating constant e be the theoretical system for determining the size of reflective elements. The light incident at angle $\theta_i$ undergoes diffraction at angle $\theta_m$ with various optical path lengths $e(\sin\theta_i + \sin\theta_m)$. The difference in optical path length is indicated by a thick line in fig. 10.

Relation of the diffraction angle to the incidence angle is described by formula (VI):

$$\theta_m = \arcsin\left(\sin\theta_i - \frac{m\lambda}{e}\right) \quad (VI),$$

where $\theta_i$ - incidence angle relative to the reflective surface, m - order of diffraction, $\lambda$ - wavelength of light, e - distance between periodic elements of the diffraction grating.

Assuming a varying value of the grating constant e, diffraction angle for the first order of diffraction m = 1 was analysed for chosen wavelengths of light $\lambda_1$ = 400 nm and $\lambda_2$ = 650 nm, for imaging of visible light range. A large difference in obtained diffraction angles $\theta_m$ indicates a significant chromatic dispersion, which in case of the imaging system will result in image distortion. In the conducted analysis, the angle difference having a value 1° was taken as the threshold value.

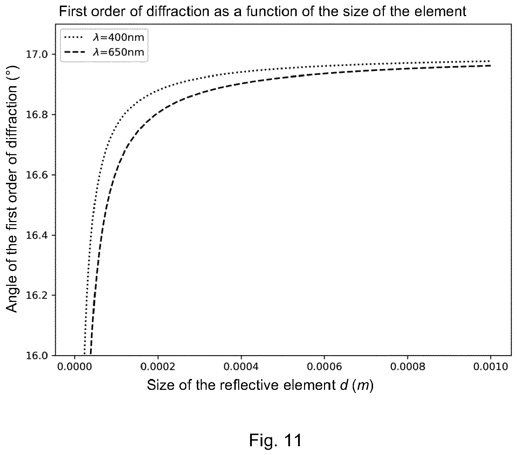

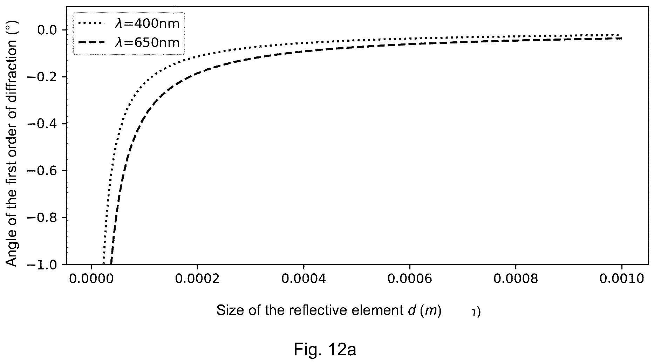

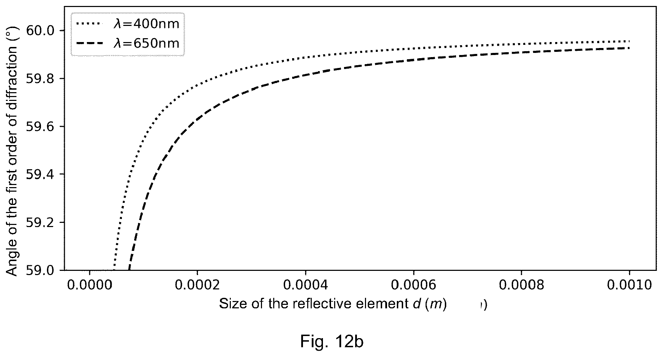

The results for angle 17° shown on fig. 11 constitute an average value of incidence angle for a standard projection system with projector 6. The presented projection system is independent from the incidence angle, therefore other chosen incidence angles 0° (fig. 12a) and 60° (fig. 12b) were also analysed in order to show an extreme situation of observation through the visor 1.

In case of large incidence angle, the threshold value of reflective element size is shifted towards higher values. Analysis of graphs (figs. 11, 12a, 12b) indicates that the size of flat reflective elements FRE, i.e. their dimension c, forming the reflective assemblies 4 and 5, should not be less than 10 $\mu$m in order to obtain reflection angles differing no more than 1°. Such size of elements FRE and reflection angle difference obtained with it results in that the chromatic dispersion is not observed on the image combined on the visor 1.

Visor 1 according to the invention is characterised by a number of advantages. It provides the possibility of combining and observing the image projected on the visor from the projection system along with the image of the environment, regardless of the visor's shape and size, wherein the image, being a sum thereof is free from defects (magnification, shifting of the image or changes in the visible colours) resulting from the imperfections of the element reflecting the image from the projector and prevents chromatic dispersion of the image. Further, the visor, having characteristics according to the invention, does not have a physical connection to the projection system. This allows it to be used on any helmet structure which increases the versatility of the solution.

**Example 2 Structure of the visor with a surface completely filled with the semitranslucent flat reflective elements (fig. 5)**

In this embodiment, the visor has all the advantages of the structure according to previous embodiments of the invention.

In another variant of the embodiment, the front outer surface 2 (i.e. facing the outside world) of the visor 1 is entirely formed as an assembly of semitranslucent flat reflective elements (FRE) 5a, differing from elements of the flat assembly of reflective elements 5 (FRE5) only in size b, incorporated into the curvature of the visor 1, arranged parallelly to the reflective elements (FRE) of assembly 4 located on the inner surface 3 of visor 1. Assembly 5a is a large-scale equivalent of elements 5, i.e. covering the entire outer surface 2 of visor 1, and referring to the structure of visor 1, it also constitutes the second assembly of semitranslucent flat reflective elements.

Complete filling of visor 1 makes it possible to use the entire surface as a projection surface, as well as sending the image to both eyes, creating a fully stereoscopic virtual image.

**Example 3 Structure of visor with the outer surface completely covered with a protective layer (fig. 7)**

In this embodiment, the visor has all the advantages of the structure according to previous embodiments of the invention.

In a further embodiment, the outer surface 2 of visor 1 is covered with a protective layer 8, which protects the reflective outer surface 5 and the outer side of the visor from damage. To create the protective layer, any material can be used, especially a polymer which forms thin films easily, does not change the optical properties of the visor (identical or very close refractive index), and a layer formed from it is characterised by mechanical resistance.

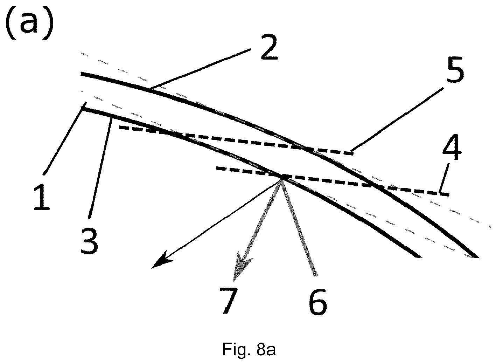

**Example 4 Dependence of reflection on the location of the reflective surface (figs. 8a-8b)**

In this embodiment, the visor has all the advantages of the structure according to previous embodiments of the invention.

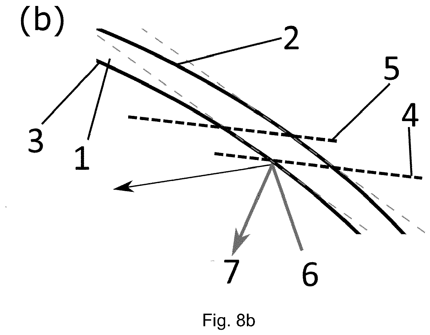

Figs. 8a and 8b are schematic illustrations of light reflection from the reflective surface 4, comprised of flat reflective elements FRE. They show that reflection does not depend on the arrangement of the visor 1, but only on the arrangement of the reflective element 4 (8a, 8b).

The visor 1 has a system of curvatures, which are designed adequately for the helmet. Whereas the location of the projector 6 depends on the structure of the helmet, but is also conditioned by helmet's safety of use. In extreme cases, the location of the projector 6 is unfavourable from the perspective of optics of the projection system (projector 6 and surfaces 2 and 3). The solution according to the invention makes the projector's 6 point of location independent of the visor's curvature, so it can be used in various helmet models. Then, each helmet is equipped with a projection system operating on the same principle and comprised of the same components.

**Example 5 Reflection dependence on thickness d of flat reflective elements (figs. 9a-9b)**

Flat reflective elements, both on the outer 2 and on the inner surface 3 can have constant thickness ($d_1$ in fig. 9a), varying dimension c or be characterised by a varying thickness ($d_2$ and $d_3$ in fig. 9b) and constant $c$. This does not affect the achieved effect of image combining.

Thickness d of a single reflective element FRE, forming an assembly of reflective elements 4 or 5, can be expressed by the following equations:

- assume that the curvature of visor's 1 surface is described by equation f(x), such that the reflective surface 4 or 5 is described by a constant value $y = r$, where in point according to function (VII):

$$P(x_0, f(x_0)) \qquad (VII)$$

- the element has thickness d and tangent $f_t(x)$ to f(x) in point P is described by formula (VIII):

$$f_t(x) = \frac{d}{dx}f(x_0)(x - x_0) + f(x_0) \quad (VIII)$$

where function $f_p(x)$ is perpendicular to $f_t(x)$ and forms a base for a right-angled triangle having height d to a vertex of angle 90°. From point P' having a distance from point P equal to d laying on $f_p(x)$, two segments are drawn to the curve f(x) parallelly to y = 0 and x = 0, respectively. The segment parallel to y = 0 constitutes the surface of reflection.

The above expression (VIII) describes the general condition, for which the size of reflective elements is defined, as the distance of the edge from the tangent to the visor, then the line perpendicular to the tangent is the point from which the thickness of reflective elements is measured. Moreover, it follows from equation (VIII) that it is possible to use the reflective elements incorporated into the visor's structure having any curvature, by approximating it with a function described as above, using many surfaces parallel to y = 0, recreating the visor's curvature (figs. 9a-9b).

Changing the size (thickness d) of reflective elements results in a possibility to adapt it to practically any visor that is used, already in the designing step during the helmet manufacture. The only condition that has to be met is that the outer 2 and inner 3 surfaces of visor have to be parallel in every point of its curvature. The advantages of changing the thickness of elements comprise:

- adaptation to the surface curvature,

- eliminating distortions in areas of priority significance (by determining the size of reflection planes for crucial elements), as well as distortions of the outer image, changing the size of elements FRE will cause a reduction of diffraction by breaking the structure's periodicity.

**Claims**

1. Visor for a helmet or headgear comprising a first surface and a second surface parallel to the first surface and located on the opposite side of the visor relative to the first surface, formed in relation to the longitudinal curvature and transverse curvature of the visor, **characterised in that,** a first assembly (4) of semitranslucent flat reflective elements, composited with the first surface (3) of the visor (1) facing outwards from the first surface and opposite to the second surface (2), is located on the first surface (3), and a second assembly (5) of semitranslucent flat reflective elements, composited with the second surface (2) of the visor (1) facing outwards from the second surface and opposite to the first surface, is located on the second surface (2), and the reflective elements of the second assembly (5) of semitranslucent flat reflective elements are parallel to the reflective elements of the first assembly (4) of semitranslucent flat reflective elements, wherein the first (FRE4) and second (FRE5) semitranslucent flat reflective elements, forming the first (4) and second (5) assembly of semitranslucent flat reflective elements, have a shorter side c and longer side b and thickness d, and the shorter side c of the first (FRE4) and second (FRE5) reflective elements is at least 10 μm long, wherein the first (FRE4) and second (FRE5) semitranslucent flat reflective elements, forming the first (4) and second (5) assembly of semitranslucent reflective elements, are arranged with their shorter side c parallel to the longitudinal curvature KW of the visor and with their longer side b parallel to the transverse curvature KP of the visor (1), wherein the reflective elements (FRE4, FRE5), forming the first assembly (4) of semitranslucent flat reflective elements and the second assembly (5) of semitranslucent flat reflective elements have the same thickness d.

2. Visor according to claim 1, **characterised in that** the semitranslucent flat reflective elements forming the first assembly (4) of semitranslucent flat reflective elements or the second assembly (5) or (5a) of semitranslucent flat reflective elements are inclined at an angle $\alpha$ relative to the first surface (3) of the visor or the second surface (2) of the visor.

3. Visor according to claim 2, **characterised in that** the inclination angle $\alpha$ of the semitranslucent flat reflective elements (FRE) is in range of 90° to -90° relative to the longitudinal curvature (KW) of the visor (1).

4. Visor according to claim 1 or 2, **characterised in that** the second surface (2) of the visor (1) is completely covered with the semitranslucent flat reflective elements (5a).

5. Visor according to claim 1, 2 or 3, **characterised in that** the second surface (2) of the visor (1) is covered with a protective outer layer (8).

6. Visor according to claim 1, 2, 3 or 4, **characterised in that** the thickness d of the semitranslucent flat reflective elements (FRE4) of the first assembly (4) of semitranslucent flat reflective elements or the second semitranslucent flat reflective elements (FRE5) of the second assembly (5) or (5a) of reflective elements is constant.

7. Visor according to claim 1, 2, 3, 4 or 5, **characterised in that** the thickness d of the semitranslucent flat reflective elements of the first assembly (4) of semitranslucent flat reflective elements (FRE4) or the second semitranslucent flat reflective elements (FRE5) of the second assembly (5) or (5a) of reflective elements depends on the degree of curvature of the visor.

8. Visor according to claim 1, **characterised in that** the first surface (3) is the inner surface of the visor (1).

9. Visor according to claim 1, **characterised in that** the second surface (2) is the outer surface of the visor (1).

10. Visor according to claims 1 to 8, **characterised in that** the arrangement of the semitranslucent flat reflective elements (FRE5) or (FRE4) provides a difference in reflection angles of the radiation incident on the elements of the first (4) and second (5) or (5a) assembly of semitranslucent flat reflective elements, that is less than 1°, wherein the difference depends on the wavelength of the incident radiation and the incident radiation constitutes radiation in the visible range.

Fig. 1

Fig. 2

helmet

5

1

b

c

Fig. 3

Fig. 4

Fig. 5

Fig. 5a

Fig. 6

Fig. 7

Fig. 8a

Fig. 8b

Fig. 9a

Fig. 9b

Fig. 10

First order of diffraction as a function of the size of the element

Fig. 11

Fig. 12a

Fig. 12b

Europäisches
Patentamt

European
Patent Office

Office européen
des brevets

# EUROPEAN SEARCH REPORT

**Application Number**

EP 20 46 1572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/186179 A1 (KNOWLES GARY R [US]) 12 December 2002 (2002-12-12) * figures 1, 2, 3, 7 * ----- | 1-10 | INV. G02B27/01 |
| Y | JP 2000 249965 A (ASAHI GLASS CO LTD) 14 September 2000 (2000-09-14) * figure 4 * ----- | 1-10 | |
| A | US 4 220 400 A (VIZENOR RICHARD P [US]) 2 September 1980 (1980-09-02) * figures 1, 2 * ----- | 1-10 | |

**TECHNICAL FIELDS SEARCHED (IPC)**

G02B

The present search report has been drawn up for all claims

| Place of search | Date of completion of the search | Examiner |
|---|---|---|
| Munich | 3 March 2021 | Serbin, Jesper |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 46 1572

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2021

| Patent document cited in search report | Publication date | Patent family member(s) | Publication date |
|---|---|---|---|
| US 2002186179 A1 | 12-12-2002 | US 2002186179 A1<br>WO 02099509 A1 | 12-12-2002<br>12-12-2002 |
| JP 2000249965 A | 14-09-2000 | NONE | |
| US 4220400 A | 02-09-1980 | NONE | |

EPO FORM P0459

For more details about this annex : see Official Journal of the European Patent Office, No. 12/82

**EP 3 809 187 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018217305 A
- EP 0794448 B1
- CN 204855944 U
- US 2016282616 A1
- JP 2010019874 A
- US 2012162549 A1
- US 2016037849 A1
- EP 0288365 A1
- WO 2016203212 A2